# EUROPÄISCHE PATENTSCHRIFT

(11) **EP 0 584 084 B1**
(45) Veröffentlichungstag und Bekanntmachung des Hinweises auf die Patenterteilung: **04.01.1995**
(21) Anmeldenummer: 92906813.8
(22) Anmeldetag: 20.03.1992
(51) Int. Cl.: B62D 29/00, B62D 21/09, B62D 27/02

(54) **LEICHTMETALL-GUSSTEIL UND VERFAHREN ZU SEINER HERSTELLUNG**
LIGHT-METAL CASTING AND PROCESS FOR PRODUCING IT
PIECE COLEE EN METAL LEGER ET SON PROCEDE DE FABRICATION

(30) Priorität: 17.05.1991 DE 4116132
(43) Veröffentlichungstag der Anmeldung: 02.03.1994
(73) Patentinhaber: AUDI AG, 85002 Ingolstadt (DE)
(72) Erfinder: SPIES, Robert, D-8070 Ingolstadt (DE); ENNING, Norbert, D-8071 Denkendorf (DE); TIMM, Heinrich, D-8070 Ingolstadt (DE)
(74) Vertreter: Engelhardt, Harald
(86) Internationale Anmeldenummer: EP9200622
(87) Internationale Veröffentlichungsnummer: WO9220562

(56) Entgegenhaltungen:
- FR-E- 54 422
- GB-A- 565 993
- GB-A- 1 110 346
- US-A- 1 622 598

## Beschreibung

Die Erfindung betrifft ein Leichtmetall-Bauteil gemäß dem Oberbegriff des Patentanspruchs 1, sowie ein Verfahren zur Herstellung des Leichtmetall-Bauteils gemäß dem Oberbegriff des Patentanspruchs 11.

Aus der GB-A-1110346 ist ein Strangpreßprofil mit einem ersten und einem zweiten Schenkel aus Aluminium oder einer Aluminiumlegierung bekannt. An einem der Schenkel schließt sich einstückig eine Lasche an, welche von dem ersten Schenkel weg weist und zur Festlegung eines anderen Bauelements umgebogen wird. Das andere Bauelement wird durch das Dach eines Campingfahrzeuges gebildet. Das die beiden Schenkel aufweisende Bauteil aus Leichtmetall stellt eine Art Eckleiste dar, welche am seitlichen Dachrand angeordnet ist. Um das Biegen des einen Schenkels zu dem Dach hin an einer definierten Stelle zu ermöglichen, ist an der vorgesehenen Biegestelle eine rinnenförmige Aussparung vorgesehen.

Die tragende Struktur eines Kraftfahrzeugs, beispielsweise eines Personenkraftwagens, wird heutzutage mehr und mehr aus Leichtmetallelementen hergestellt, beispielsweise aus Profilelementen, die über Knotenelemente miteinander verbunden sind. Die Leichtmetallelemente sind vorzugsweise Gußteile, die sich einfach und kostengünstig herstellen lassen. Ein in dieser Weise aufgebauter Personenkraftwagen ist bereits aus der EP 0 146 716 B1 bekannt.

Schwere Baugruppen, wie z. B. Türen oder dergleichen, lassen sich jedoch nicht unmittelbar an den Leichtmetallelementen befestigen, da diese nicht stabil genug sind. Es wurde daher bereits vorgeschlagen, am Leichtmetall-Gußteil zusätzliche Halteteile vorzusehen, die zur Aufnahme der schweren Baugruppen dienen. Zur Montage der genannten Halteteile an den Gußteilen ist es jedoch erforderlich, die Gußteile im nachhinein zu bearbeiten, so daß für die Verbindung zwischen Halteteil und Gußteil relativ viel Zeit benötigt wird, was die Montagekosten des Kraftfahrzeugs erhöht.

Der Erfindung liegt die Aufgabe zugrunde, ein Leichtmetall-Gußteil der genannten Art zu schaffen, das sich in einfacher Weise herstellen und so ausbilden läßt, daß ein Halteteil ohne größeren Aufwand und sehr schnell mit ihm verbunden werden kann.

Die vorrichtungsseitige Lösung der gestellten Aufgabe ist im kennzeichnenden Teil des Patentanspruchs 1 angegeben. Dagegen findet sich eine verfahrensseitige Lösung der gestellten Aufgabe im kennzeichnenden Teil des Patentanspruchs 11. Vorteilhafte Ausgestaltungen der Erfindung sind den nachgeordneten Unteransprüchen zu entnehmen.

Ein Leichtmetall-Gußteil nach der Erfindung mit einem ersten und einem zweiten Schenkel, wobei an einer Außenseite des ersten Schenkels ein Halteteil befestigbar ist, zeichnet sich dadurch aus, daß
- der zweite Schenkel mit einer quer zu seiner Schenkelfläche verlaufenden Durchgangsöffnung versehen ist, und
- an dem dem ersten Schenkel zugewandten Rand der Durchgangsöffnung eine am zweiten Schenkel einstückig angeformte Lasche angeordnet ist, die vom ersten Schenkel weg weist und über das Halteteil biegbar ist.

Zur Befestigung des Halteteils am Leichtmetall-Gußteil wird das Halteteil also zunächst auf die Außenseite des ersten Schenkels aufgelegt, während anschließend die Lasche in Richtung dieser Außenseite des ersten Schenkels verbogen und über das Halteteil geschwenkt wird, und zwar so weit, daß die Lasche nunmehr das Halteteil gegen die Außenseite des ersten Schenkels drückt und somit am Leichtmetall-Gußteil festhält.

Die Montage des Halteteils am Leichtmetall-Gußteil läßt sich somit in einfacher Weise und sehr schnell durchführen, da nur ein Umbiegen der Lasche erforderlich ist.

Die Lasche und das Leichtmetall-Gußteil werden einstückig miteinander verbunden im selben Gießvorgang hergestellt, so daß das Leichtmetall-Gußteil nach seiner Fertigung nicht weiter bearbeitet zu werden braucht, um Mittel zur Befestigung des Halteteils vorzusehen.

Die Herstellung des Leichtmetall-Gußteils mit daran einstückig angeformter Lasche erfolgt nach der Erfindung mit Hilfe von zwei Formteilen, von denen eines nach dem Gießen entgegengesetzt zur Laschenerstreckungsrichtung aus der Durchgangsöffnung herausgezogen wird. Dieses Formteil befindet sich also an der der Außenseite gegenüberliegenden Seite des ersten Schenkels, wobei die Entformungsrichtungen beider Formteile zueinander entgegengesetzt sind und parallel zum ersten Schenkel verlaufen.

Infolge der einander entgegengesetzten Entformungsrichtungen für beide Formteile ist es möglich, die Lasche so auszubilden, daß sie zum freien Laschenende hin eine sich vergrößernde Querschnittsdicke aufweist. Hierdurch wird erreicht, daß sich das Umbiegeverhalten der Lasche gezielt beeinflussen läßt, etwa so, daß sie bei Krafteinwirkung in Richtung zum Halteteil zuerst unmittelbar am oberen Rand des zweiten Schenkels abgebogen und dann nach Umschwenken über das Halteteil und bei etwas größerem Kraftaufwand in einem Bereich weiter verbogen wird, der unmittelbar oberhalb der freien Kante des Halteteils liegt.

Beispielsweise kann diese Querschnittsdicke der Lasche, also die senkrecht zur Laschenebene verlaufende Dicke, stufenförmig vergrößert sein, um noch gezielter die Biegeregionen der Lasche festzulegen sowie die Reihenfolge der nacheinander zu verbiegenden Laschenbereiche.

Möglich ist z. B., die genannte Querschnittsdicke vom oberen Rand des zweiten Schenkels stetig zu erweitern, um den ersten Knickbereich möglichst nahe an die obere Seite des zweiten Schenkels heranzuziehen. Im weiteren Verlauf kann sich dann die Laschendicke stufenartig vergrößern, wozu die Lasche einen Ansatz aufweist, der vom Halteteil weg weist. Der Ansatz kommt dabei oberhalb der Durchgangsöffnung im zweiten Schenkel zu liegen. Durch diesen Ansatz läßt sich dann der zweite Knickbereich gezielt festlegen, der also oberhalb der Vorderkante des Halteteils zu liegen kommt, nachdem die Lasche umgebogen worden ist.

Nach einer vorteilhaften Weiterbildung der Erfindung sind an der Außenseite des ersten Schenkels Mittel zum Fixieren des der Lasche abgewandten Endes des Halteteils angeordnet. Das Halteteil läßt sich somit an gegenüberliegenden Enden am Leichtmetall-Gußteil befestigen, so daß eine noch bessere Lagefixierung erreicht wird.

Die Mittel können vorzugsweise durch eine Nase gebildet sein, die das Halteteil durchragt.

Nach einer anderen vorteilhaften Weiterbildung der Erfindung liegt die zum zweiten Schenkel weisende Seite der Nase an ihrem freien Ende näher am zweiten Schenkel als an ihrem dem ersten Schenkel benachbarten Ende. Die Nase umgreift daher die freie Seite des Halteteils, so daß auch zusätzlich eine Verschwenkung des Halteteils senkrecht zum ersten Schenkel unterbunden wird.

Nach einer anderen Ausgestaltung der Erfindung weisen die Mittel einen am freien Ende des ersten Schenkels einstückig angeformten dritten Schenkel auf, der entgegengesetzt zum zweiten Schenkel verläuft und auf dem das Halteteil aufliegt. Das Leichtmetall-Gußteil weist somit praktisch eine S-förmige Struktur auf. Um die Bewegung des Halteteils senkrecht zum ersten Schenkel zu unterbinden, kann dieses z. B. in eine Nut des dritten Schenkels eingreifen, die sich im Eckbereich zwischen erstem und drittem Schenkel befindet.

Das Halteteil kann beispielsweise als Platte mit einer randseitigen Ausnehmung ausgebildet sein, in die die Nase eingreift. Die Nase kann dabei sowohl am ersten als auch am dritten Schenkel befestigt sein.

Zur Aufnahme schwerer Baugruppen, wie z. B. Türen und dergleichen, besteht das Halteteil aus hochfestem Material, beispielsweise aus Stahl. Im Halteteil können Durchgangsbohrungen, z. B. Durchgangsgewindebohrungen, vorhanden sein, mit deren Hilfe sich z. B. ein Türscharnier am Halteteil befestigen läßt.

Die Erfindung wird nachfolgend unter Bezugnahme auf die Zeichnung näher beschrieben. Es zeigen:
- Fig. 1: eine perspektivische Ansicht eines Leichtmetall-Gußteils nach der Erfindung mit angelegtem Halteteil und
- Fig. 2: einen Schnitt durch Leichtmetall-Gußteil und Halteteil entlang der Linie I-I in Fig. 1.

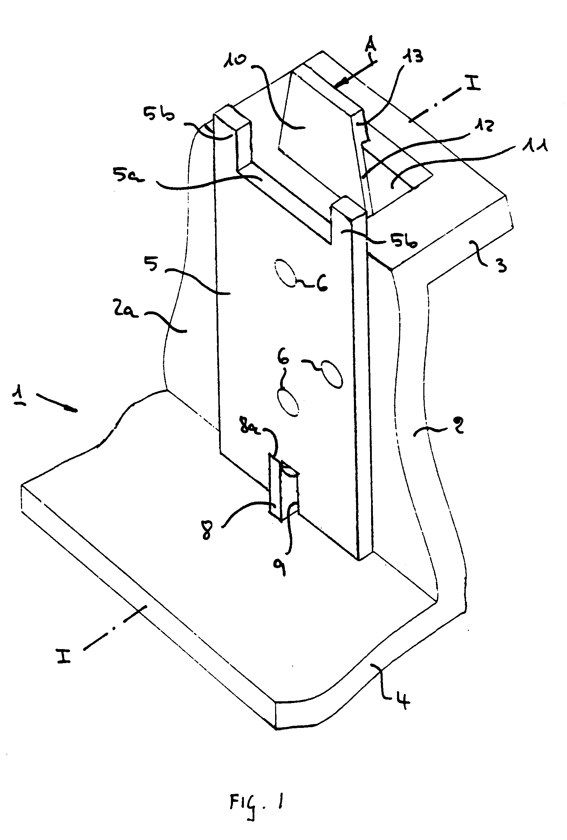

Die Fig. 1 zeigt eine perspektivische Darstellung eines Leichtmetall-Gußteils nach der Erfindung, das beispielsweise aus Aluminium-Druckguß hergestellt ist. Das Leichtmetall-Gußteil trägt das Bezugszeichen 1 und weist eine S-förmige Querschnittsstruktur auf. Es kann sich bei ihm z. B. um einen entsprechenden Profilträger handeln, dessen Längsrichtung in Fig. 1 von rechts unten nach links oben verläuft.

Wie zu erkennen ist, besteht im vorliegenden Ausführungsbeispiel das Leichtmetall-Gußteil aus einem ersten Schenkel 2, einem zweiten Schenkel 3 und einem dritten Schenkel 4. Sämtliche Schenkel 2, 3 und 4 sind einstückig miteinander verbunden, wobei der zweite Schenkel 3 und der dritte Schenkel 4 an gegenüberliegenden Enden des ersten Schenkels 2 liegen und sich in entgegengesetzte Richtungen erstrecken. Die Schenkel 2, 3 und 4 sind als ebene Platten ausgebildet und können gleiche oder unterschiedliche Wandstärken aufweisen. Sowohl zwischen dem ersten Schenkel 2 und dem zweiten Schenkel 3 als auch zwischen dem ersten Schenkel 2 und dem dritten Schenkel 4 ist jeweils ein Winkel von 90° gewählt.

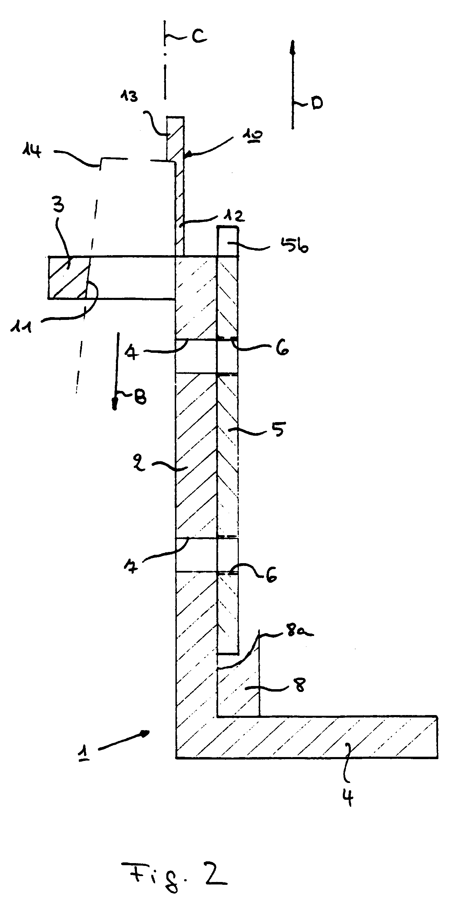

Eine Außenseite des ersten Schenkels 2 trägt das Bezugszeichen 2a. An dieser Außenseite 2a des ersten Schenkels 2 liegt ein Halteteil 5, das als ebene Platte mit rechteckiger Form ausgebildet ist. Die Platte 5 liegt also mit ihrer einen Hauptfläche direkt auf der Außenseite 2a. Zur Befestigung einer nicht dargestellten Baugruppe weist die Platte 5 Durchgangsgewindebohrungen 6 auf, die senkrecht zur Plattenebene verlaufen. In diese Durchgangsgewindebohrungen 6 lassen sich Schrauben hineinschrauben, um z. B. ein Scharnier für eine Fahrzeugtür mit der Platte 5 zu verbinden. Statt der Durchgangsgewindebohrungen 6 können auch Durchgangsbohrungen ohne Gewinde in der Platte 5 vorhanden sein, die mit entsprechenden Durchgangsbohrungen 7 im ersten Schenkel 2 fluchten (siehe Fig. 2). In diesem Fall lassen sich zur Befestigung einer Baugruppe an der Platte 5 z. B. Gewindebolzen durch die Bohrungen 6 und 7 hindurchstecken, auf die Muttern aufgeschraubt werden, die an der der Platte 5 gegenüberliegenden Seite des ersten Schenkels 2 zu liegen kommen. Zwischen den Muttern und dem ersten Schenkel 2 können sich geeignete Unterlegscheiben befinden.

Die als Halteteil dienende Platte 5 steht mit ihrem unteren Rand auf der Innenseite des dritten Schenkels 4 auf und wird darüber hinaus durch eine Nase 8 in ihrer Lage fixiert. Die Nase 8 ist im Eckbereich zwischen erstem Schenkel 2 und drittem Schenkel 4 mit beiden Schenkeln 2, 4 z. B. einstückig verbunden und durchragt eine randseitige Ausnehmung 9 am unteren Ende der Platte 5. Insbesondere ist die Nase 8 so ausgebildet, daß die zum zweiten Schenkel 3 weisende Nasenseite an ihrem freien Ende 8a näher am zweiten Schenkel 3 liegt als an ihrem dem ersten Schenkel 2 benachbarten Ende. Die Nase 8 hintergreift also mit ihrem freien Ende 8a die Platte 5 und verhindert damit, daß sich die Platte 5 senkrecht zum ersten Schenkel 2 bewegen kann. Hierzu sind die Nase 8 bzw. ihr oberer Verlauf und die Tiefe der Ausnehmung 9 in geeigneter Weise aufeinander abgestimmt, so daß praktisch kein Spiel mehr zwischen dem oberen Ende der Nase 8 und dem ihm gegenüberliegenden Randbereich der Platte 5 vorhanden ist. Der obere Verlauf der Nase 8 kann z. B. ausgehend vom Spitzenbereich 8a bogenförmig nach unten in Richtung zum ersten Schenkel 2 verlaufen.

Die Nase 8 verhindert darüber hinaus eine Bewegung der Platte 5 in Längsrichtung des Leichtmetall-Gußteils 1, also parallel zum ersten Schenkel 2, da die Plattenbereiche zu beiden Seiten der Ausnehmung 9 praktisch spielfrei gegen die Seiten der Nase 8 zu liegen kommen.

Zur Verhinderung einer Bewegung der Platte 5 senkrecht zum ersten Schenkel 2 kann im Eckbereich zwischen erstem Schenkel 2 und drittem Schenkel 4 auch eine Nut im dritten Schenkel 4 vorhanden sein, in die das untere Ende der Platte 5 passend eingreift. In diesem Fall kann die besondere Ausbildung der Nase 8 in ihrem Spitzenbereich 8a entfallen. Die Nut ist in Fig. 1 der Übersicht wegen nicht dargestellt.

Um die Platte 5 in ihrem oberen Bereich am ersten Schenkel 2 zu fixieren, weist sie an ihrem oberen Ende eine randseitige Ausnehmung 5a auf. Diese randseitige Ausnehmung 5a erstreckt sich so weit in die Platte 5 nach unten, daß sie praktisch mit der oberen Fläche des zweiten Schenkels 3 fluchtet. Auf diese Weise entstehen am oberen Ende der Platte 5 links und rechts Ansätze 5b.

Im Bereich der randseitigen Ausnehmung 5a und zwischen den Ansätzen 5b der Platte 5 kommt im befestigten Zustand der Platte 5 eine Lasche 10 zu liegen. Diese Lasche 10 ist in Fig. 1 in nichtverbogenem Zustand dargestellt.

Wie die Fig. 1 zeigt, befindet sich im zweiten Schenkel 3 eine Durchgangsöffnung 11, die eine rechteckige Form aufweist. Die langen Seiten der Durchgangsöffnung 11 verlaufen dabei parallel zur Außenseite 2a des ersten Schenkels 2 und somit parallel zur Platte 5. Die Lasche 10 ist an dem dem ersten Schenkel 2 zugewandten Rand der Durchgangsöffnung 11 einstückig am zweiten Schenkel 3 angeformt. Sie ragt dabei nach oben und verläuft praktisch senkrecht zum zweiten Schenkel 3 sowie parallel zum ersten Schenkel 2 und von diesem weg.

Ein unterer Bereich 12 der Lasche 10 ist dünnwandig ausgebildet, was bedeutet, daß die Lasche 10 senkrecht zur Laschenebene eine geringe Dicke aufweist. Dagegen befindet sich am freien Ende der Lasche 10 ein Ansatz 13, also ein relativ dicker Materialbereich, gesehen in einer Richtung senkrecht zur Laschenebene. Der Ansatz 13 erstreckt sich parallel zur Ebene des zweiten Flansches 3, also in Längsrichtung des Leichtmetall-Gußteils 1, und kommt darüber hinaus oberhalb der Durchgangsöffnung 11 zu liegen. Er befindet sich also an der der Platte 5 abgewandten Seite der Lasche 10. Diejenige Seite der Lasche 10, die der Platte 5 zugewandt ist, ist völlig eben und verläuft senkrecht zur Oberfläche des zweiten Flansches 3.

Wie die Fig. 1 zeigt, kann die Lasche 10, senkrecht auf die Laschenebene gesehen, einen trapezförmigen Querschnitt aufweisen, wobei die Laschenbreite an der Seite des zweiten Flansches 3 größer ist als am freien Ende der Lasche. Die Dicke der Lasche 10 in Fig. 1 ist im unteren Bereich 12 konstant, kann aber, in Abwandlung davon, auch in Richtung des freien Laschenendes kontinuierlich größer werden, was jedoch der Übersicht wegen nicht im einzelnen dargestellt ist.

Durch die Wahl der Dicke der Lasche 10 senkrecht zur Laschenebene gesehen, lassen sich Biegebereiche für die Lasche 10 definiert festlegen, also solche Bereiche, in denen sich die Lasche 10 nacheinander leicht verbiegen läßt. Insbesondere durch einen trapezförmigen Dickenverlauf senkrecht zur Laschenebene, bei dem die Dicke der Lasche 10 in unmittelbarer Nähe des zweiten Flansches 3 am geringsten ist, läßt sich ein erster Biegebereich der Lasche 10 sehr nahe an den zweiten Flansch 3 heranziehen. Ein zweiter Biegebereich der Lasche 10 ergibt sich im Übergangsbereich zum noch dickeren Ansatz 13.

Wird also zunächst in Richtung des Pfeils A in Fig. 1 eine Kraft auf die Lasche 10 ausgeübt, so verbiegt sie sich zuerst in ihrem unteren Bereich 12 in der Nähe des zweiten Flansches 3 bzw. bei trapezförmigem Dickenverlauf unmittelbar an der Kante der Durchgangsöffnung 11. Die Lasche 10 kommt dann zunächst in horizontaler Richtung zu liegen, wobei sie in die randseitige Ausnehmung 5a hineinragt. Die Breite der Lasche 10 in Längsrichtung des Leichtmetall-Gußteils 1 kann dabei so gewählt sein, daß zwischen der Lasche 10 und den Ansätzen 5b kein großes Spiel mehr vorhanden ist, so daß die Lasche 10 schon jetzt eine Verkippung der Platte 5 in ihrer Plattenebene verhindert. Wird die Lasche 10 mit jetzt größerem Kraftaufwand noch weiter umgebogen, so knickt sie im Übergangsbereich zwischen dem unteren Bereich 12 und dem oberen Bereich 13 ab, so daß schließlich die Rückseite des Ansatzes 3 gegen die freie Seite der Platte 5 drückt und diese am Schenkel 2 festlegt. Die Höhe des unteren Bereichs 12 über dem zweiten Schenkel 3 ist dabei so gewählt, daß nach Umbiegen der Lasche 10 um 90° der Übergangsbereich zwischen der unteren Bereich 12 und dem Ansatz 13 oberhalb der vorderen und freien Kante der Platte 5 zu liegen kommt.

Die Fig. 2 zeigt einen Querschnitt entlang der Linie I-I in Fig. 1, also einen Schnitt senkrecht zur Längsrichtung des Leichtmetall-Gußteils 1. Dabei ist die Lasche 10 ebenfalls noch nicht umgebogen, während die Platte 5 an der Außenseite 2a des ersten Flansches 2 anliegt.

Wie zu erkennen ist, durchragt beim Gießen des Leichtmetall-Gußteils, bei nicht vorhandener Platte 5, ein Formteil 14 von unten durch die sich bildende Durchgangsöffnung 11 innerhalb des zweiten Flansches 3 hindurch und dient zur besonderen Dickenausbildung der Lasche 10 in ihrem unteren Bereich 12 bzw. zur Ausbildung der Stufe zwischen dem Bereich 12 und dem Ansatz 13. Das Formteil 14 wird nach dem Gießen des Leichtmetall-Gußteils 1 nach unten bzw. entgegengesetzt zur Laschenerstreckungsrichtung aus der Durchgangsöffnung 11 herausgezogen, also in Richtung des Pfeils B in Fig. 2. Die Teilungsebene ist in Fig. 2 mit dem Bezugszeichen C versehen. Durch die besondere Anordnung des Formteils 14 beim Gießen des Leichtmetall-Gußteils 1 läßt sich also die senkrecht zur Laschenebene vorhandene Dicke der Lasche 10 im unteren Bereich 12 in gewünschter Weise einstellen, derart, daß sie sich zum freien Laschenende hin vergrößert, um somit definierte Biegebereiche, die parallel zur Oberfläche des zweiten Flansches 3 verlaufen, innerhalb der Lasche 10 festlegen zu können.

Das zweite Formteil, welches in Fig. 2 nicht explizit dargestellt ist, befindet sich an der rechten Seite der Lasche 10 in Fig. 2 bzw. rechts vom ersten Schenkel 2 und oberhalb des dritten Schenkels 4. Es wird nach dem Gießen des Leichtmetall-Gußteils 1 in Richtung des Pfeils D entfernt, also nach oben in Fig. 2 gezogen.

## Patentansprüche

1. Bauteil aus Leichtmetall, mit einem ersten und einem zweiten Schenkel (2, 3), wobei an einem der Schenkel eine Lasche (10) einstückig angeformt ist, welche von dem ersten Schenkel (2) weg weist und welche zur Festlegung eines anderen Bauelements biegbar ist, dadurch gekennzeichnet,
- daß das Bauteil aus Leichtmetall ein Leichtmetall-Gußteil (1) ist,
- daß an der Außenseite (2a) des ersten Schenkels (2) des Leichtmetall-Gußteiles (1) ein Halteteil (5) befestigbar ist,
- daß der zweite Schenkel (3) mit einer quer zu seiner Schenkelfläche verlaufenden Durchgangsöffnung (11) versehen ist, und
- daß die Lasche an dem dem ersten Schenkel (2) zugewandten Rand der Durchgangsöffnung (11) an dem zweiten Schenkel (3) angeordnet ist.

2. Leichtmetall-Gußteil nach Anspruch 1, **dadurch gekennzeichnet**, daß die Lasche (10) eine sich zum freien Laschenende hin vergrößernde Querschnittsdicke aufweist.

3. Leichtmetall-Gußteil nach Anspruch 2, **dadurch gekennzeichnet**, daß sich diese Querschnittsdicke der Lasche (10) stufenförmig vergrößert.

4. Leichtmetall-Gußteil nach einem der Ansprüche 1 bis 3, **dadurch gekennzeichnet**, daß an der Außenseite (2a) des ersten Schenkels (2) Mittel (8, 8a) zum Fixieren des der Lasche (10) abgewandten Endes des Halteteils (5) angeordnet sind.

5. Leichtmetall-Gußteil nach Anspruch 4, **dadurch gekennzeichnet**, daß die Mittel durch eine Nase (8) gebildet sind, die das Halteteil (5) durchragt.

6. Leichtmetall-Gußteil nach Anspruch 5, **dadurch gekennzeichnet**, daß die zum zweiten Schenkel (3) weisende Seite der Nase (8) an ihrem freien Ende (8a) näher am zweiten Schenkel (3) liegt als an ihrem dem ersten Schenkel (2) benachbarten Ende.

7. Leichtmetall-Gußteil nach einem der Ansprüche 4 bis 6, **dadurch gekennzeichnet**, daß die Mittel einen am freien Ende des ersten Schenkels (2) einstückig angeformten dritten Schenkel (4) aufweisen, der entgegengesetzt zum zweiten Schenkel 3 verläuft und auf dem das Halteteil (5) aufliegt.

8. Leichtmetall-Gußteil nach Anspruch 7, **dadurch gekennzeichnet**, daß das Halteteil (5) in eine Nut des dritten Schenkels (4) eingreift.

9. Leichtmetall-Gußteil nach einem der Ansprüche 5 bis 8, **dadurch gekennzeichnet**, daß das Halteteil (5) als Platte mit einer randseitigen Ausnehmung (9) ausgebildet ist, in die die Nase (8) eingreift.

10. Leichtmetall-Gußteil nach einem der Ansprüche 1 bis 9, **dadurch gekennzeichnet**, daß das Halteteil (5) aus Stahl besteht.

11. Verfahren zur Herstellung des Leichtmetall-Gußteils nach Anspruch 1, **dadurch gekennzeichnet**, daß eines (14) von zwei Formteilen nach dem Gießen entgegengesetzt zur Laschenerstreckungsrichtung aus der Durchgangsöffnung (11) herausgezogen wird.

## Claims

1. Part made of light metal, having a first and a second leg (2, 3), and there being formed integrally on one of the legs a lug (10) which points away from the first leg (2) and which is adapted to bend in order to locate another part, characterised in that
- the part made of light metal is a light-metal casting (1),
- a retaining member (5) is adapted to be fastened on the outer face (2a) of the first leg (2) of the light-metal casting (1),
- the second leg (3) incorporates a through-opening (11) extending at right angles to its leg surface, and
- the lug is disposed at that edge of the through-opening (11) in the second leg (3) which is nearest the first leg (2).

2. Light-metal casting according to claim 1, characterised in that the cross-sectional thickness of the lug (10) increases towards the free end of the lug.

3. Light-metal casting according to claim 2, characterised in that said cross-sectional thickness of the lug (10) increases in steps.

4. Light-metal casting according to any of claims 1 to 3, characterised in that on the outer face (2a) of the first leg (2) there are disposed means (8, 8a) for fixing in place that end of the retaining member (5) which is remote from the lug (10).

5. Light-metal casting according to claim 4, characterized in that said means are constituted by a nose (8) which projects through the retaining member (5).

6. Light-metal casting according to claim 5, characterized in that the free end (8a) of the face of the nose (8) that points towards the second leg (3) is situated closer to the second leg (3) than it is to its end that adjoins the first leg (2).

7. Light-metal casting according to any of claims 4 to 6, characterized in that the means incorporate a third leg (4) which is formed integrally on the free end of the first leg (2), extends in the opposite direction to the second leg (3) and is supported on the retaining member (5).

8. Light-metal casting according to claim 7, characterised in that the retaining member (5) engages in a groove in the third leg (4).

9. Light-metal casting according to any of claims 5 to 8, characterized in that the retaining member (5) is in the form of a plate with a recess (9) along its edge into which the nose (8) engages.

10. Light-metal casting according to any of claims 1 to 9, characterized in that the retaining member (5) is made of steel.

11. Process for manufacturing the light-metal casting according to claim 1, characterised in that after the casting operation, one (14) of two formed parts is drawn out from the through-opening (11) in the opposite direction to the direction in which the lug extends.

## Revendications

1. Elément de construction en métal léger, présentant une première aile (2) et une seconde aile (3), sur l'une desquelles est formée d'une seule pièce une languette d'attache (10) qui est dirigée à l'opposé de la première aile (2) et qui peut être fléchie pour la fixation d'un autre élément de construction, caractérisé en ce que
- l'élément de construction est une pièce coulée en métal léger (1),
- une pièce de support (5) peut être fixée sur la face extérieure (2a) de la première aile (2) de la pièce coulée en métal léger (1),
- la seconde aile (3) est munie d'une ouverture de passage (11) qui s'étend perpendiculairement à sa surface, et
- la languette d'attache est disposée sur la seconde aile (3) au bord de l'ouverture de passage (11) situé du côté de la première aile (2).

2. Pièce coulée en métal léger selon la revendication 1, caractérisée en ce que la languette d'attache (10) présente une épaisseur, en coupe transversale, qui augmente en direction de son extrémité libre.

3. Pièce coulée en métal léger selon la revendication 2, caractérisée en ce que cette épaisseur de la section transversale de la patte d'attache (10) augmente par échelon.

4. Pièce coulée en métal léger selon l'une quelconque des revendications 1 à 3, caractérisée en ce qu'il est disposé, sur la face extérieure (2a) de la première aile (2), des moyens (8, 8a) pour la fixation de l'extrémité de la pièce de support (5) située à l'opposé de la languette d'attache (10).

5. Pièce coulée en métal léger selon la revendication 4, caractérisée en ce que lesdits moyens sont constitués par un tenon (8) qui fait saillie à travers la pièce de support (5).

6. Pièce coulée en métal léger selon la revendication 5, caractérisée en ce que le côté du tenon (8) orienté vers la seconde aile (3) est plus proche de la seconde aile (3) à son extrémité libre (8a) qu'à son extrémité contiguë à la première aile (2).

7. Pièce coulée en métal léger selon l'une quelconque des revendications 4 à 7, caractérisé en ce que lesdits moyens comprennent une troisième aile (4) qui est formée d'une seule pièce à l'extrémité libre de la première aile (2), s'étend à l'opposé de la seconde aile (3) et sur laquelle repose la pièce de support (5).

8. Pièce coulée en métal léger selon la revendication 7, caractérisée en ce que la pièce de support (5) s'engage dans une rainure de la troisième aile (4).

9. Pièce coulée en métal léger selon l'une quelconque des revendications 5 à 8, caractérisée en ce que la pièce de support (5) est réalisée sous forme de plaque présentant, sur un bord, un entaille (9) dans laquelle s'engage le tenon (8).

10. Pièce coulée en métal léger selon l'une quelconque des revendications 1 à 9, caractérisée en ce que la pièce de support (5) est en acier.

11. Procédé de fabrication de la pièce coulée en métal léger selon la revendication 1, caractérisé en ce qu'après la coulée, l'une (14) de deux parties de moule est retirée de l'ouverture de passage (11) dans la direction opposée à celle dans laquelle s'étend la languette d'attache.
